# EUROPÄISCHE PATENTSCHRIFT

(11) **EP 1 062 717 B1**
(45) Veröffentlichungstag und Bekanntmachung des Hinweises auf die Patenterteilung: **12.05.2004**
(21) Anmeldenummer: 98966792.8
(22) Anmeldetag: 21.12.1998
(51) Int. Cl.: H02J 13/00

(54) **NETZWERKANKOPPLUNGSVORRICHTUNG UND -VERFAHREN**
NETWORK COUPLING DEVICE AND METHOD
DISPOSITIF ET PROCEDE D'ACCOUPLEMENT A UN RESEAU

(30) Priorität: 19.03.1998 DE 19812013
(43) Veröffentlichungstag der Anmeldung: 27.12.2000
(73) Patentinhaber: ROBERT BOSCH GMBH, 70442 Stuttgart (DE)
(72) Erfinder: NOTTEBOM, Bernd, D-71726 Benningen (DE); ULLMANN, Stefan, D-70499 Stuttgart (DE); KARL, Matthias, D-76275 Ettlingen (DE)
(86) Internationale Anmeldenummer: PCT/DE1998/003740
(87) Internationale Veröffentlichungsnummer: WO 1999/048186

(56) Entgegenhaltungen:
- EP-A- 0 759 651
- EP-A- 0 833 426
- DE-A- 4 439 057
- DE-A- 19 515 633
- DE-A- 19 635 826
- DE-C- 19 715 880

## Beschreibung

### STAND DER TECHNIK

Die vorliegende Erfindung betrifft eine Netzwerkankopplungsvorrichtung zur Ankopplung von mindestens einer Applikation an ein Netzwerk mit einer Energieübertragungseinrichtung zum Übertragen von elektrischer Energie an die Applikation, einer Informationsübertragungseinrichtung zum Senden von Informationen an die Applikation und/oder Empfangen von Informationen von der Applikation und einer Kommunikationssteuereinrichtung zum Steuern der Kommunikation mit dem Netzwerk. Die vorliegende Erfindung betrifft ebenfalls ein entsprechendes Netzwerkankopplungsverfahren.

Unter Applikationen sollen hierin Funktionseinheiten verstanden werden, welche unter bestimmten Umständen über das Netzwerk kommunizieren müssen, z.B. Sensoreinheiten, Aktuatoreinheiten oder kompliziertere Daten- und/oder Signalverarbeitungseinheiten.

Obwohl auf beliebige Netzwerke und Applikationen anwendbar, werden die vorliegende Erfindung sowie die ihr zugrundeliegende Problematik in bezug auf Applikationen in Form von Schaltern bzw. Tastern für den Einsatz in Bussystemen, insbesondere im europäischen Installationsbus (EIB), erläutert.

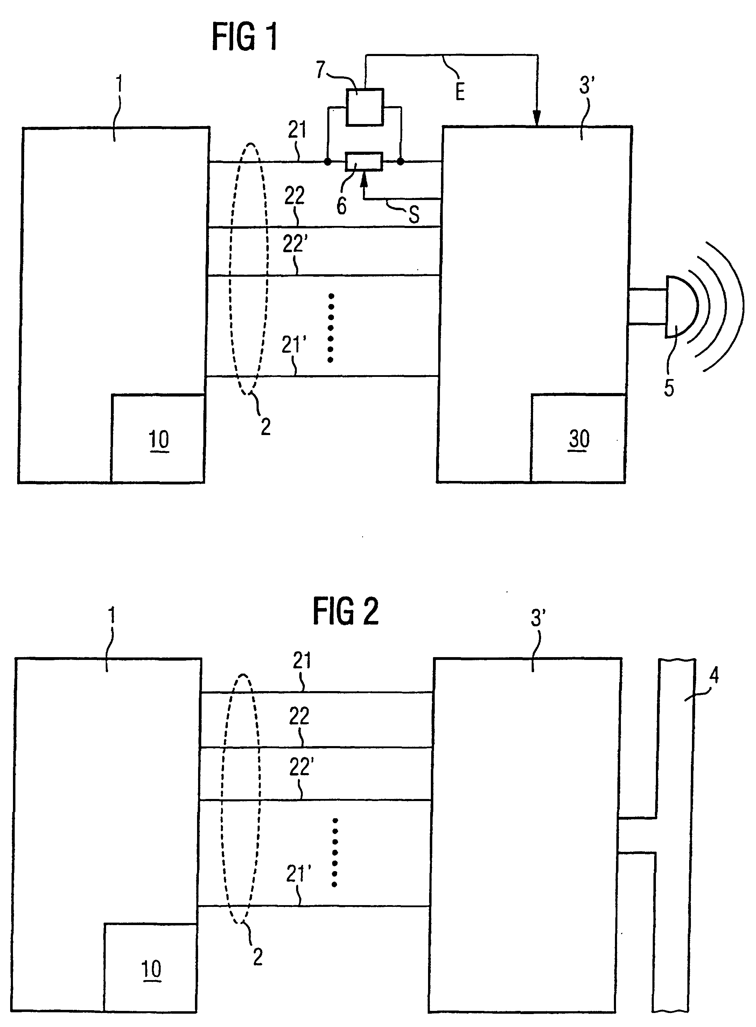

Solche Applikationen bestehen aus betätigbaren Schalt- bzw. Tastkontakten, welche über eine Schnittstelle, im einfachsten Fall einen Stecker, mit der Netzwerkankopplungsvorrichtung verbunden sind. Die Netzwerkankopplungsvorrichtung ist ihrerseits mit einem Netzwerk üblicherweise über einen Bus, also eine Drahtschnittstelle, verbunden. Am Beispiel des EIB soll dies in Zusammenhang mit Fig. 2 näher erläutert werden.

In Fig. 2 bezeichnen 1 eine Applikation mit Schaltern bzw. Tastern (nicht dargestellt), 2 eine elektrisch und mechanisch standardisierte Schnittstelle, beispielsweise in Form eines Steckers, 3 eine Netzwerkankopplungsvorrichtung und 4 einen Bus. Über die Schnittstelle 2 laufen Energieversorgungsleitungen 21, 21' sowie Informations- bzw. Datenleitungen 22, 22'. 10 bezeichnet eine in der Applikation 1 vorgesehene Funktionsschaltung, welche nachstehend näher erläutert wird.

Der Betrieb dieser üblichen Netzwerkankopplungsvorrichtung 3 verläuft folgendermaßen.

Über die Energieversorgungsleitungen 21, 21' versorgt die Netzwerkankopplungsvorrichtung 3 die an sich passive, d.h. keine Energieversorgung aufweisende, Applikation 1 ständig bzw. kontinuierlich mit elektrischer Energie. Ändert sich der Status eines Tasters bzw. Schalters, so wird dies durch die Funktionsschaltung 10 der Applikation 1 erfaßt und über eine entsprechende Informationsleitung 22 bzw. 22' an die Netzwerkankopplungsvorrichtung 3 gemeldet. Die Netzwerkankopplungsvorrichtung 3 wertet diese Meldung intern aus und sendet gemäß einer in ihr vorgesehenen Ablaufsteuerung eine entsprechende Nachricht an einen oder mehrere Empfänger im Netzwerk über den Bus 4.

Es gibt derzeit auf dem Markt Schalter- bzw. Tasterapplikationen mit bis zu acht Kontakten. Die zur Erfassung der Zustände dieser Kontakte eingesetzte Funktionsschaltung 10 ist üblicherweise eine getaktete Digitalschaltung, wie z.B. ein Mikrocontroller oder Schieberegister.

Als problematisch hat sich dabei herausgestellt, daß solch eine Funktionsschaltung 10 einen derart hohen Stromverbrauch verursacht, daß eine kontinuierliche Energieversorgung der Applikation von der Netzwerkankopplungsvorrichtung 3 aus durch eine Batterie praktisch nicht möglich ist.

Daher wird üblicherweise ein Bus 4 verwendet, welcher selbst Energieversorgungsleitungen aufweist, wie z.B. der EIB oder der CAN-Bus (CAN = Controller Area Network), und diese Energieversorgung wird durch die Netzwerkankopplungsvorrichtung 3 über die Schnittstelle 2 mittels der Energieversorgungsleitungen 21, 21' zur Applikation 1 durchgeschleift.

In der DE 195 15 633 wird eine Schaltung offenbart, mit der eine Last mit elektrischer Energie versorgt werden kann. Dazu ist ein Aktor vorgesehen, der wie ein Relais funktioniert. Nur über den Aktor ist die Spannungsversorgung mit der Last verbindbar. Zum Betätigen des Aktors kann entweder ein Schaltsignal eines Schalters oder aber ein Signal eines Buskopplers genutzt werden. Diese Schaltung ermöglicht, die Last sowohl durch einen in unmittelbarer Nähe angeordneten Schalter wie auch aus der Entfernung über ein Bussystem zu betätigen.

Aus der DE 196 35 826 ist bereits eine Vorrichtung bekannt, die den Energieverbrauch eines Verbrauchers überprüft. Wenn dabei der Energieverbrauch einen bestimmten Wert unterschreitet, so wird die Energieversorgung vollständig gesperrt. Ein Wiedereinschalten kann dadurch erfolgen, dass die Vorrichtung entsprechend betätigt wird.

### VORTEILE DER ERFINDUNG

Die erfindungsgemäße Netzwerkankopplungsvorrichtung mit den Merkmalen des Anspruchs 1 und das entsprechende Netzwerkankopplungsverfahren nach Anspruch 9 weisen gegenüber dem bekannten Lösungsansatz den Vorteil auf, dass der Energieverbrauch der Applikation drastisch gesenkt werden kann, so dass ein Batteriebetrieb auch über eine längere Betriebszeit möglich ist. Insbesondere kann erfindungsgemäß die Höhe der Versorgungsspannung bzw. des Versorgungsstroms der Applikation abhängig von deren Zustandsänderungen gesteuert werden. Die Applikation muss für diese Art der Stromversorgung vorteilhafterweise nicht verändert werden, d.h. es kann die. gleiche Applikation wie für die Versorgung über den "twistedpair" EIB verwendet werden und nur die Netzwerkankoppelungsvorrichtung ist verändert.

Die der vorliegenden Erfindung zugrundeliegende Idee besteht darin, dass das Eintreten einer Zustandsänderung der Applikation erfasst wird, während diese im Standby-Betrieb verweilt, und ein normaler Betrieb nur solange stattfindet, bis der neue Zustand, der das Resultat der Zustandsänderung ist, als Reaktion auf die Zustandsänderung der Netzwerkankopplungsvorrichtung mitgeteilt ist. Dies spart dann Energie, da die Zustandsänderungen üblicherweise nicht kontinuierlich, sondern zeitdiskret ablaufen.

In den Unteransprüchen finden sich vorteilhafte Weiterbildungen und Verbesserungen der in Anspruch 1 angegebenen Netzwerkankopplungsvorrichtung bzw. des in Anspruch 9 angegebenen Netzwerkankopplungsverfahrens.

Gemäß einer bevorzugten Weiterbildung ist die Energieübertragungs-Steuereinrichtung derart gestaltet ist, daß sie das Umschalten eine bestimmte Zeitspanne lang durchführt. Dies läßt sich einfach durch einen steuerbaren Zeitgeber realisieren. Allerdings sollte dafür gesorgt werden, daß die Zeitspanne so lange andauert, bis der neue Zustand, der das Resultat der Zustandsänderung ist, der Netzwerkankopplungsvorrichtung mitgeteilt ist.

Gemäß einer weiteren bevorzugten Weiterbildung ist die Energieübertragungs-Steuereinrichtung derart gestaltet, daß sie das Umschalten bis zum Empfang einer bestimmten Information von der Applikation durchführt. In diesem Fall findet ein ereignisorientiertes Rückschalten auf den Ausgangszustand statt. Dies hat den Vorteil, daß das Umschalten, d.h. der Normalzustand nur solange andauert, wie unbedingt erforderlich.

Gemäß einer weiteren bevorzugten Weiterbildung weist die Energieübertragungs-Steuereinrichtung einen steuerbaren Widerstand auf, der in eine Energieübertragungsleitung geschaltet ist. Diese Variante ermöglich eine einfache Steuerung der Energieübertragung. Ein hochohmiger Widerstandswert kennzeichnet beispielsweise den Standby-Zustand, und ein niederohmiger den Normalzustand. Selbstverständlich ist der Begriff Widerstand allgemein zu verstehen, beinhaltet also auch Halbleiterschalter o.ä..

Gemäß einer weiteren bevorzugten Weiterbildung weist die Energieübertragungszustand-Änderungserfassungseinrichtung eine Einrichtung zur Erfassen einer Änderung des Spannungsabfalls an dem steuerbaren Widerstand auf. Im Gleichgewichtszustand mit bestimmter Ansteuerung des Widerstands bewirkt eine Zustandsänderung der Applikation eine Änderung des Spannungsabfalls über diesem Widerstand auslöst. Zweckmäßigerweise hat der Widerstand eine Doppelfunktion, nämlich die der Strombegrenzung und die der Spannungserfassung. Daher ist diese Variante besonders kostengünstig realisierbar.

Gemäß einer weiteren bevorzugten Weiterbildung ist eine Batterieversorgung zum Bereitstellen der elektrischen Energie für die Applikation in der Netzwerkankopplungsvorrichtung vorgesehen. Solch eine Batterieversorgung wäre bei nur einem Energieversorgungszustand praktisch nicht realisierbar.

Gemäß einer weiteren bevorzugten Weiterbildung erfolgt die Ankopplung an das Netzwerk über eine drahtlose Schnittstelle, vorzugsweise eine Funkschnittstelle oder eine optische Schnittstelle. Insbesondere hier, wo eine Stromversorgung über einen Drahtleitungsbus ausscheidet, zeigen sich die Vorteile der vorliegenden Erfindung besonders deutlich.

Gemäß einer weiteren bevorzugten Weiterbildung ist das Netzwerk das EIB-Netzwerk und ist die Applikation eine Schalter- bzw. Taster-Applikation.

### ZEICHNUNGEN

Ein Ausführungsbeispiel der Erfindung ist in den Zeichnungen dargestellt und in der nachfolgenden Beschreibung näher erläutert.

Es zeigen:
- Fig. 1: eine schematische Darstellung eines Ausführungsbeispiels der erfindungsgemäßen Netzwerkankopplungsvorrichtung; und
- Fig. 2: eine schematische Darstellung einer üblichen Netzwerkankopplungsvorrichtung.

### BESCHREIBUNG DER AUSFÜHRUNGSBEISPIELE

Fig. 1 ist eine schematische Darstellung eines Ausführungsbeispiels der erfindungsgemäßen Netzwerkankopplungsvorrichtung. In Fig. 1 bezeichnen gleiche Bezugszeichen gleiche oder funktionsgleiche Elemente wie in Fig. 2.

In Fig. 1 bezeichnen zusätzlich zu den mit Bezug auf Fig. 2 erläuterten Bestandteilen 3' den Teil der erfindungsgemäßen Netzwerkankopplungsvorrichtung entsprechend 3 dem Teil 3 der üblichen Netzwerkankopplungsvorrichtung, S eine Steuerleitung, 6 einen Widerstand, 7 eine Energieübertragungszustand-Änderungserfassungseinrichtung, E eine Erfassungsleitung, 30 eine Batterieversorgung und 5 eine Funkverbindung zu den übrigen Komponenten des Netzwerks.

Das Netzwerk ist in diesem Ausführungsbeispiel ebenfalls das EIB-Netzwerk mit einer Funkschnittstelle und die Applikation eine Schalter- bzw. Taster-Applikation.

Der Teil 3' der Netzwerkankopplungsvorrichtung enthält eine Energieübertragungseinrichtung, welche zum Übertragen von elektrischer Energie an die Applikation 1 über die Energieübertragungsleitungen 21, 21' dient. Diese Energie kommt aus der Batterieversorgung 30.

Außerdem enhält der Teil 3' der Netzwerkankopplungsvorrichtung eine Informationsübertragungseinrichtung zum Senden von Informationen an die Applikation 1 und Empfangen von Informationen von der Applikation 1 über die Informationsübertragungsleitungen 22, 22' und eine Kommunikationssteuereinrichtung zum Steuern der Kommunikation mit dem Netzwerk zur Übertragung von Informationen zwischen der Applikation 1 und anderen Netzwerkkomponenten über die Funkverbindung 5.

Außerhalb des Teils 3' gezeigt, doch prinzipiell auch darin integrierbar, ist eine Energieübertragungs-Steuereinrichtung in Form des über die Steuerleitung S steuerbaren Widerstands 6 zum Steuern des Energieübertragungszustands auf einen ersten und einen zweiten Energieübertragungszustand, wobei der erste Zustand ein Standby-Zustand mit reduzierter Energieübertragung und der zweite Zustand ein Zustand normaler Energieübertragung ist. Normal heißt in diesem Zusammenhang, daß die Funktionsschaltung 10 zur Informationsübermittlung in diesem Zustand funktionsfähig ist.

Auch aus Übersichtlichkeitsgünden außerhalb des Teils 3' gezeigt, doch prinzipiell auch darin integrierbar, ist eine Energieübertragungszustand-Änderungserfassungseinrichtung in Form einer Spannungserfassungseinrichtung 7 zum Erfassen einer Änderung des Energieübertragungszustands im ersten der beiden Energieübertragungszustände, d.h. im Standby-Zustand.

Der Widerstand 6 ist derart ansteuerbar, daß er ansprechend auf die Erfassung einer durch die Applikation 1 verursachten Änderung des Energieübertragungszustands in dem ersten Energieübertragungszustand ein Umschalten auf den anderen, d.h. normalen Energieübertragungszustand durchführt.

Mit anderen Worten wird im Standby-Zustand der Strom, der durch den Widerstand 6 fließt, von der Spannungserfassungseinrichtung 7 überwacht. Ändert sich der Zustand oder die Stellung eines betreffenden Schalters oder Tasters, so hat dies eine Änderung des Spannungsabfalls am Widerstand 6 zur Folge. Diese Spannungsänderung wird detektiert und veranlaßt das Umschalten in den Normalzustand. Dies wiederum aktiviert die Funktionsschaltung 10, die den neuen Zustand der Applikation 1 bestimmt und ihn an den Teil 3' übermittelt, von wo er weiteren daran interessierten Netzwerkkomponenten mitgeteilt wird.

Bei dieser Ausführungsform wird der Widerstand 6 derart gesteuert, daß er das Umschalten bis zur vollständigen Übermittlung des neuen Zustands der Applikation 1 durchführt. Danach kehrt er in den hochohmigen Standby-Zustand zurück. Das Erreichen der vollständigen Übermittlung wird durch die im Teil 3' vorgesehene Steuereinrichtung ermittelt.

Ein zweckmäßiger Funktionsablauf sieht ebenfalls den Aufbau einer Kommunikation mit dem Netzwerk unmittelbar ansprechend auf das Erfassen der durch die Applikation 1 verursachten Änderung des Energieübertragungszustands vor.

Obwohl die vorliegende Erfindung anhand eines bevorzugten Ausführungsbeispiels vorstehend beschrieben wurde, ist sie darauf nicht beschränkt, sondern auf vielfältige Weise modifizierbar.

Insbesondere läßt sich die erfindungsgemäße Netzwerkankopplungsvorrichtung nicht nur für die angeführten Schalter- bzw. Taster, sondern für beliebige Applikationen verwenden.

Auch eignet sich die erfindungsgemäße Netzwerkankopplungsvorrichtung nicht nur für eine Drahtschnittstelle zum Netzwerk, sondern auch für Funkschnittstellen und optische Schnittstellen.

Obwohl die obige Ausführungsform eine Energieübertragungs-Steuereinrichtung mit einem steuerbaren Widerstand aufweist, der in eine Energieübertragungsleitung geschaltet ist, ist die Erfindung nicht darauf beschränkt. Selbstverständlich kann auch ein fester Widerstand mit einem entsprechenden Bypass vorgesehen sein oder eine sonstige bekannte Energieübertragungs-Steuereinrichtung.

Auch kann die Erfassung der Energieversorgungszustandsänderung bzw. Lastschwankung über eine Spule, einen Kondensator eine Diode oder ein sonstiges geeignetes Bauelement erfolgen.

Obwohl bei dem obigen Beispiel nur eine Energieübertragungsleitung überwachbar ist, können selbstverständlich auch mehrere bzw. alle Energieübertragungsleitungen überwacht werden.

### BEZUGSZEICHENLISTE:

| | |
|---|---|
| 1 | Applikation |
| 10 | Funktionsschaltung |
| 2 | Schnittstelle (Stecker) |
| 21, 21' | Energieübertragungsleitung |
| 22, 22' | Informationsübertragungsleitung |
| 3 | übliche Netzwerkankopplungsvorrichtung |
| 4 | Bus |
| 3' | Teil der erfindungsgemäßen Netzwerkankopplungsvorrichtung entsprechend 3 |
| S | Steuerleitung |
| 6 | Widerstand |
| 7 | Energieübertragungszustand-Änderungserfassungseinrichtung |
| E | Erfassungsleitung |
| 30 | Batterieversorgung |
| 5 | Funkverbindung |

## Patentansprüche

1. Netzwerkankopplungsvorrichtung (3'; 6; 7; 21, 21'; 22, 22'; 30) zur Ankopplung von mindestens einer Applikation (1, 10) an ein Netzwerk mit:
einer Energieübertragungseinrichtung (21; 21') zum Übertragen von elektrischer Energie an die Applikation (1);
einer Informationsübertragungseinrichtung (22; 22') zum Senden von Informationen an die Applikation (1) und/oder Empfangen von Informationen von der Applikation (1); und
einer Kommunikationssteuereinrichtung zum Steuern der Kommunikation mit dem Netzwerk; **gekennzeichnet durch**
eine Energieübertragungs-Steuereinrichtung (3', 6) zum Steuern des Energieübertragungszustands auf mindestens einen Standbyund einen Normal-Energieübertragungazustand; und
eine Energieübertragungszustand-Änderungserfassungseinrich-tung (3', 7) zum Erfassen einer Änderung des Energisübertragungszustands in mindestens dem Standby-Energieübertragungszustand;
wobei die Energieübertragungs-Steuereinrichtung (3', 6) derart gestaltet ist, daß sie ansprechend auf die Erfassung einer **durch** die Applikation (1) verursachten Änderung des Energieübertragungszustands im Standby-Energieübertragungszustand ein Umschalten auf den Normal-Energieübertragungszustand durchführt.

2. Netzwerkankopplungsvorrichtung nach Anspruch 1, **dadurch gekennzeichnet, daß** die Energieübertragungs-Steuereinrichtung (3', 6) derart gestaltet ist, daß sie das Umschalten eine bestimmte Zeitspanne lang durchführt.

3. Netzwerkankopplungsvorrichtung nach Anspruch 1, **dadurch gekennzeichnet, daß** die Energieübertragungs-Steuereinrichtung (3', 6) derart gestaltet ist, daß sie das Umschalten bis zum Empfang einer bestimmten Information von der Applikation (1) durchführt.

4. Netzwerkankopplungsvorrichtung nach Anspruch 1, 2 oder 3, **dadurch gekennzeichnet, daß** die Energieübertragungs-Steuereinrichtung (3', 6) einen steuerbaren Widerstand (6) aufweist, der in eine Energieübertragungsleitung (21) geschaltet ist.

5. Netzwerkankopplungsvorrichtung nach Anspruch 4, **dadurch gekennzeichnet, daß** die Energieübertragungszustand-Änderungserfassungseinrichtung (3', 7) eine Einrichtung (7) zur Erfassen einer Änderung des Spannungsabfalls an dem steuerbaren Widerstand (6) aufweist.

6. Netzwerkankopplungsvorrichtung nach einem der vorhergehenden Ansprüche, **gekennzeichnet durch** eine Batterieversorgung (30) zum Bereitstellen der elektrischen Energie für die Applikation (1).

7. Netzwerkankopplungsvorrichtung nach einem der vorhergehenden Ansprüche, **dadurch gekennzeichnet, daß** die Ankopplung an das Netzwerk über eine drahtlose Schnittstelle (5), vorzugsweise eine Funkschnittstelle oder eine optische Schnittstelle, erfolgt.

8. Netzwerkankopplungsvorrichtung nach einem der vorhergehenden Ansprüche, **dadurch gekennzeichnet, daß** das Netzwerk das EIB-Netzwerk und die Applikation eine Schalter- bzw. Taster-Applikation ist.

9. Verfahren zur Ankopplung von mindestens einer Applikation (1) an ein Netzwerk mit einer Netzwerkankopplungsvorrichtung gemäß mindestens einem der vorhergehenden Ansprüche mit den Schritten:
Steuern des Energieübertragungszustands auf den Standby-Energieübertragungszustand, wobei eine reduzierte Energieübertragung vorgesehen wird;
Erfassen einer durch die Applikation (1) verursachten Änderung des Energieübertragungszustands;
Steuern des Energieübertragungszustands auf den Normal-Energieübertragungszustand, wobei eine normale Energieübertragung vorgesehen wird;
Empfangen von Informationen von der Applikation (1); und
Steuern des Energieübertragungszustands auf den Standby-Energieübertragungszustand, wobei eine reduzierte Energieübertragung vorgesehen wird.

10. Verfahren nach Anspruch 9, **gekennzeichnet durch** den Schritt des Aufbaus einer Kommunikation mit dem Netzwerk ansprechend auf das Erfassen der **durch** die Applikation (1) verursachten Änderung des Energieübertragungszustands.

## Claims

1. Network coupling apparatus (3'; 6; 7; 21, 21'; 22, 22'; 30) for coupling at least one application (1, 10) to a network having:
a power transmission device (21; 21') for transmitting electrical power to the application (1) ;
an information transmission device (22; 22') for sending information to the application (1) and/or receiving information from the application (1); and
a communication control device for controlling the communication with the network; **characterized by** a power transmission control device (3', 6) for switching the power transmission state to at least one standby power transmission state and one normal power transmission state; and
a power transmission state change detection device (3', 7) for detecting a change in the power transmission state, in at least the standby power transmission state;
the power transmission control device (3', 6) being designed such that, in response to the detection of a change, brought about by the application (1), in the power transmission state in the standby power transmission state, it switches over to the normal power transmission state.

2. Network coupling apparatus according to Claim 1, **characterized in that** the power transmission control device (3', 6) is designed such that it switches over for a specific time span.

3. Network coupling apparatus according to Claim 1, **characterized in that** the power transmission control device (3', 6) is designed such that it switches over until a specific item of information is received from the application (1).

4. Network coupling apparatus according to Claim 1, 2 or 3, **characterized in that** the power transmission control device (3', 6) has a controllable resistor (6) which is connected into a power transmission line (21).

5. Network coupling apparatus according to Claim 4, **characterized in that** the power transmission state change detection device (3', 7) has a device (7) for detecting a change in the voltage drop across the controllable resistor (6).

6. Network coupling apparatus according to one of the preceding claims, **characterized by** a battery supply (30) for providing the electrical power for the application (1).

7. Network coupling apparatus according to one of the preceding claims, **characterized in that** the coupling to the network takes place via a wireless interface (5), preferably a radio interface or an optical interface.

8. Network coupling apparatus according to one of the preceding claims, **characterized in that** the network is the EIB network and the application is a switch or button application.

9. Method for coupling at least one application (1) to a network having a network coupling apparatus according to at least one of the preceding claims having the steps of:
switching of the power transmission state to the standby power transmission state, in which a reduced power transmission is provided;
detection of a change, brought about by the application (1), in the power transmission state;
switching of the power transmission state to the normal power transmission state, in which a normal power transmission is provided;
reception of information from the application (1); and
switching of the power transmission state to the standby power transmission state, in which a reduced power transmission is provided.

10. Method according to Claim 9, **characterized by** the step of setting up a communication with the network in response to the detection of the change, brought about by the application (1), in the power transmission state.

## Revendications

1. Dispositif de couplage sur un réseau (3' ; 6 ; 7 ; 21, 21' ; 22, 22' ; 30) pour coupler au moins une application (1, 10) sur un réseau comprenant :
- une installation de transmission d'énergie (21 ; 21') pour transmettre de l'énergie électrique à l'application (1),
- une installation de transmission d'informations (22 ; 22') pour envoyer des informations à l'application (1) et/ou pour recevoir des informations de l'application (1) et
- une installation de commande de communication pour commander la communication avec le réseau,
**caractérisé par**
une installation de commande de transmission d'énergie (3', 6) pour commander l'état de transmission d'énergie sur au moins un état d'attente et un état normal de transmission d'énergie et
une installation de saisie de variation d'état de transmission d'énergie (3', 7) pour saisir une variation de l'état de transmission d'énergie dans au moins l'état d'attente de transmission d'énergie,
l'installation de commande de transmission d'énergie (3', 6) étant conçue de façon qu'en fonction de la saisie d'une variation occasionnée par l'application (1) de l'état de transmission d'énergie dans l'état d'attente de transmission d'énergie, elle commute sur l'état normal de transmission d'énergie.

2. Dispositif de couplage sur un réseau selon la revendication 1,
**caractérisé en ce que**
l'installation de commande de transmission d'énergie (3', 6) est conçue pour qu'elle effectue la commutation pendant une période déterminée.

3. Dispositif de couplage sur un réseau selon la revendication 1,
**caractérisé en ce que**
l'installation de commande de transmission d'énergie (3', 6) est conçue pour qu'elle effectue la commutation jusqu'à la réception d'une certaine information en provenance de l'application (1).

4. Dispositif de couplage sur un réseau selon les revendication 1, 2 ou 3,
**caractérisé en ce que**
l'installation de commande de transmission d'énergie (3', 6) comporte une résistance commandée (6) branchée dans au moins une ligne de transmission d'énergie (21).

5. Dispositif de couplage sur un réseau selon la revendication 4,
**caractérisé en ce que**
l'installation de saisie de la variation d'état de transmission d'énergie (3', 7) comprend une installation (7) pour saisir une variation de la chute de tension sur la résistance commandée (6).

6. Dispositif de couplage sur un réseau selon l'une des revendications précédentes,
**caractérisé par**
une alimentation par batterie (30) pour fournir l'énergie électrique à l'application (1).

7. Dispositif de couplage sur un réseau selon l'une des revendications précédentes,
**caractérisé en ce que**
le couplage sur le réseau se fait par une interface sans fil (5), de préférence une interface radio ou une interface optique.

8. Dispositif de couplage sur un réseau selon l'une des revendications précédentes,
**caractérisé en ce que**
le réseau est le réseau EIB et l'application est une application de commutateur ou de touche.

9. Procédé de couplage d'au moins une application (1) sur un réseau avec un dispositif de couplage de réseau selon au moins l'une des revendications précédentes, comprenant les étapes suivantes :
- la commande de l'état de transmission d'énergie sur l'état d'attente de transmission d'énergie, avec une transmission d'énergie réduite, prévue,
- saisie d'une variation de l'état de transmission d'énergie occasionnée par l'application (1),
- commande de l'état de transmission d'énergie sur l'état normal de transmission d'énergie, une transmission d'énergie normale étant prévue,
- réception d'informations de l'application (1) et
- commande de l'état de transmission d'énergie sur l'état d'attente de transmission d'énergie, une transmission réduite d'énergie étant prévue.

10. Procédé selon la revendication 9,
**caractérisé par**
l'étape d'établissement d'une communication avec le réseau en fonction de la saisie de la variation de l'état de transmission d'énergie occasionnée par l'application (1).
